# FASCICULE DE BREVET EUROPEEN

(11) **EP 2 834 090 B1**
(45) Date de publication et mention de la délivrance du brevet: **14.06.2017**
(21) Numéro de dépôt: 13713450.8
(22) Date de dépôt: 02.04.2013
(51) Int. Cl.: B60C 15/04, B60C 15/06, B60C 19/12

(54) **PNEUMATIQUE ET ENSEMBLE PNEUMATIQUE-ROUE A MOBILITE ETENDUE**
REIFEN UND RAD-REIFEN-ANORDNUNG MIT ERWEITERTER MOBILITÄT
TYRE AND EXTENDED-MOBILITY WHEEL-TYRE ASSEMBLY

(30) Priorité: 05.04.2012 FR 1253124
(43) Date de publication de la demande: 11.02.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MERINO LOPEZ, Jose, F-63040 Clermont-Ferrand Cedex 9 (FR); AHOUANTO, Michel, F-63040 Clermont-Ferrand Cedex 9 (FR); LEFEBVRE, Serge, F-63040 Clermont-Ferrand Cedex 9 (FR); FLAMENT, Julien, F-63040 Clermont-Ferrand Cedex 9 (FR)
(74) Mandataire: Dequire, Philippe Jean-Marie Denis
(86) Numéro de dépôt international: PCT/EP2013/056932
(87) Numéro de publication internationale: WO 2013/150024

(56) Documents cités:
- EP-A1- 0 492 504
- EP-A2- 2 130 690
- WO-A1-01/54929
- WO-A1-2008/080556

## Description

### Domaine de l'invention

La présente invention est relative aux pneumatiques, et plus particulièrement aux pneumatiques adaptés pour procurer une mobilité étendue au véhicule qui en est équipé.

### État de la technique

Un pneumatique ayant les caractéristiques techniques du préambule de la revendication 1 est connu du document WO-A-0154929.

Lors d'une perforation de la paroi d'un pneumatique par un objet perforant tel une vis ou un clou, ou « crevaison », l'air de gonflage du pneumatique peut s'échapper par la perforation et la perte de pression consécutive entraîner une mise à plat du pneumatique et un arrêt du véhicule.

Pour résoudre ce problème des crevaisons qui date du début même de l'utilisation des roues chaussées de pneumatiques gonflés, la solution usuelle est de s'arrêter et de remplacer la roue concernée par une roue de secours.

D'autres solutions ont été imaginées et sont disponibles sur le marché pour éviter d'avoir à utiliser une roue de secours.

Le document US 5 916 921 présente un récipient aérosol comportant une émulsion aqueuse de latex mélangée avec différents produits dont des produits fibreux et un gaz propulseur. En cas de pneumatique à plat, ce récipient est prévu pour être fixé à la valve du pneumatique et pour envoyer dans la cavité interne du pneumatique le gaz propulseur et l'émulsion d'obturation / réparation. Le pneumatique est alors regonflé au moins partiellement, l'émulsion colmate la perforation et on peut recommencer à rouler, à vitesse réduite d'abord pour bien répartir l'émulsion sur toute la surface interne du pneumatique puis normalement.

Il existe aussi des kits de réparation, proposés par certains constructeurs automobiles en lieu et place d'une roue de secours. Cela a pour intérêt de réduire le poids de la voiture, donc sa consommation de carburant et de libérer de l'espace sous le plancher du coffre.

Les kits de réparation des pneumatiques ainsi que les bombes aérosol ne sont que des réparations temporaires. Il convient de ne pas dépasser une vitesse donnée de l'ordre de 80 km/h et de faire contrôler ou changer son pneumatique rapidement.

Les manufacturiers de pneumatiques ont aussi proposé des pneumatiques pourvus sur leur paroi intérieure ou dans leur structure d'une couche de produits élastiques, visqueux ou pâteux, appelés « produits auto-obturants », permettant une obturation des perforations. Le document WO 2008/080556 A1 présente un exemple d'un tel pneumatique. Ces pneumatiques ne sont pas en tant que tel increvables, mais les perforations sont normalement refermées ou obturées par le produit auto-obturant. Par rapport aux bombes ou kits anti-crevaison, ces pneumatiques équipés d'une couche de produit auto-obturant ont l'avantage de ne pas nécessiter d'arrêt du véhicule. En revanche, lorsque les objets perforants ont une taille trop importante ou lorsque les perforations se situent en dehors des zones en regard des couches de produit auto-obturants, ces pneumatiques ne règlent pas le problème des crevaisons.

Les manufacturiers de pneumatiques ont aussi imaginés d'introduire dans l'ensemble pneumatique/roue des éléments de renforts structurels qui permettent au pneumatique de continuer à rouler en cas d'une perte de pression liée à une crevaison. Ces éléments de renforts peuvent être placés dans la structure du pneumatique, comme dans le document WO 2002/030689 A1, on parle alors de pneumatique autoporteur, ou constituer un appui de soutien comme proposé dans le document EP 0 673 324 B1. Les pneumatiques autoporteurs et les appuis de soutien permettent à un véhicule qui en est équipé de continuer à rouler, au moins sur une distance limitée et à vitesse réduite, quelle que soit la gravité de la crevaison. En revanche, ces solutions sont coûteuses et entraînent, lors d'un usage normal du véhicule, une dégradation de certaines des performances des pneumatiques, telles le confort ou la résistance ou roulement.

### Description brève de l'invention

L'invention a pour objet un pneumatique selon la revendication 1. Ledit pneumatique est en forme de tore ouvert radialement intérieurement avec une paroi intérieure et une paroi extérieure, ladite paroi intérieure étant au moins en partie recouverte d'une couche étanche, un sommet, deux flancs et deux bourrelets, une armature de sommet et une armature de carcasse ancrée dans les deux bourrelets et s'étendant au moins desdits bourrelets jusqu'au sommet, caractérisé en ce que ladite couche étanche est, au moins en partie, recouverte d'une couche de produit auto-obturant, et en ce que, chaque bourrelet comportant une structure annulaire de renforcement, ladite structure annulaire de renforcement comprend plusieurs enroulements d'un fil métallique unique, agencés axialement côte à côte en plusieurs couches radialement superposées de façon à définir une section transversale hexagonale.

Le choix de cette structure annulaire de renforcement a pour avantage que, les bourrelets étant montés sur les sièges d'une jante de géométrie H2 de l'ETRTO et la cavité interne définie par la paroi intérieure du pneumatique et la jante étant à la pression atmosphérique, les bourrelets du pneumatique peuvent être aisément adaptés pour supporter un roulage avec une accélération transversale de 0,5 g sans aucun décoincement des bourrelets des sièges correspondants de la jante. Cette adaptation est réalisée en diminuant le développement de la structure annulaire de renforcement de quelques millimètres par rapport à une structure usuelle pour renforcer la résistance du bourrelet au décoincement. Un homme du métier réalise usuellement cette adaptation. L'avantage de la structure annulaire de renforcement décrite est de permettre ce renforcement de la résistance au décoincement sans pénaliser le montage et le démontage du pneumatique sur sa jante d'une part et sans pénaliser la fabrication du pneumatique d'autre part.

Le pneumatique selon l'invention associe ainsi la présence d'une couche de produit auto-obturant et une structure de bourrelets adaptée pour limiter les risques de décoincement des bourrelets lors d'un roulage à pression de gonflage nulle ou roulage à plat dans des conditions normales d'usage.

Par conditions « normales » d'usage, on entend des conditions d'usage accessibles à des pilotes non professionnels.

Ce pneumatique comporte une couche de produit auto-obturant, c'est-à-dire que la très grande majorité des crevaisons n'aura aucune conséquence sur la pression interne de gonflage, mais dans le cas où cette couche ne permet pas d'éviter la perte de pression du pneumatique, on a constaté que la présence de cette couche permet d'augmenter de façon significative la distance que le pneumatique peut parcourir en roulage à plat tout en conservant la possibilité de conduire le véhicule puisque les bourrelets restent en place sur les sièges de la jante. La présence de cette couche auto-obturante permet en effet de retarder l'endommagement des flancs du pneumatique par effet de lubrification notamment. Ce pneumatique permet ainsi au véhicule, quelle que soit la gravité d'une perforation ou crevaison, de continuer à rouler sur au moins quelques kilomètres ce qui permet de quitter une zone dangereuse. Cela est obtenu sans aucune dégradation des performances de confort, de résistance au roulement ou de comportement en usage normal.

La réalisation d'une structure annulaire de renforcement ou tringle telle que décrite a l'avantage de présenter une forte rigidité de torsion, très utile pour renforcer la résistance au décoincement du bourrelet du pneumatique tout en gardant une forme générale hexagonale qui facilite la réalisation du pneumatique. Par rapport à une tringle tressée, le développement de la tringle peut rester dans des valeurs acceptables pour permettre un montage et un démontage possibles du pneumatique sur sa jante.

De préférence, le fil métallique utilisé est un fil gommé de section choisie dans le groupe des sections circulaire, carrée, rectangulaire et hexagonale.

Selon un mode de réalisation particulier avantageux, les couches radialement superposées sont agencées selon la configuration 3-4-5-4-3.

Selon un autre mode de réalisation particulier, les couches radialement superposées sont agencées selon la configuration 3-4-3-2. Ce mode de réalisation a l'avantage d'avoir sensiblement la même efficacité que le précédent tout en permettant un gain de masse.

De préférence, la section du fil métallique a sa plus grande dimension comprise entre 1 et 1,8 mm.

La section du fil métallique peut être circulaire avec un diamètre compris entre 1 et 1,6 mm, et de préférence entre 1,5 et 1,6 mm.

La section du fil métallique peut être hexagonale avec un côté compris entre 0,7 et 0,9 mm. L'intérêt d'une section hexagonale du fil est de renforcer encore la rigidité de torsion de la tringle, ce qui est très favorable pour la résistance au décoincement en roulage à plat d'un bourrelet.

Selon l'invention, la structure du flanc et du bourrelet du pneumatique est telle que:
- l'armature de carcasse comportant une pluralité d'éléments de renforcement de carcasse, disposés de façon adjacente et alignés circonférentiellement, ancrés dans les deux bourrelets par un retournement autour de la structure annulaire de renforcement, de manière à former dans chaque bourrelet un brin aller et un brin retour, chaque brin retour s'étendant radialement à l'extérieur jusqu'à une extrémité située à une distance radiale DRR du point radialement le plus à l'intérieur de la structure annulaire de renforcement du bourrelet, la distance radiale DRR est supérieure ou égale à 7% et inférieure ou égale à 30% de la hauteur radiale H du pneumatique ;
- chaque bourrelet comportant un mélange caoutchouteux appelé bourrage, le bourrage étant situé radialement à l'extérieur de la structure annulaire de renforcement et au moins partiellement entre le brin aller et le brin retour de l'armature de carcasse, le bourrage s'étendant radialement à l'extérieur du point radialement le plus à l'intérieur de la structure annulaire de renforcement du bourrelet jusqu'à une distance radiale DRB dudit point, la distance radiale DRB est comprise entre 20 et 45% de la hauteur radiale H du pneumatique ;
- chaque bourrelet comportant en outre un mélange caoutchouteux appelé bande extérieure placé axialement à l'extérieur de l'armature de carcasse et du bourrage, chaque bande extérieure s'étendant radialement entre une extrémité radialement intérieure de la bande extérieure et une extrémité radialement extérieure de la bande extérieure, l'extrémité radialement intérieure de la bande extérieure étant située à une distance DRI du point radialement le plus à l'intérieur de la structure annulaire de renforcement du bourrelet, la distance radiale DRI est comprise entre 1 et 10% de la hauteur radiale H du pneumatique, l'extrémité radialement extérieure de la bande extérieure étant située à une distance DRL du point radialement le plus à l'intérieur de la structure annulaire de renforcement du bourrelet, la distance radiale DRL est comprise entre 35 et 50% de la hauteur radiale H du pneumatique.

Selon un mode de réalisation avantageux, les bourrelets comportant en plus un mélange caoutchouteux appelé protecteur destiné à entrer en contact avec un siège de jante et s'étendant en partie axialement extérieurement relativement à ladite bande extérieure, l'ensemble formé par les mélanges caoutchouteux bourrage, bande extérieure et protecteur a une épaisseur maximale E, mesurée dans tout plan radial dans une direction perpendiculaire au brin aller de l'armature de carcasse avec l'ensemble, telle que le rapport E/DRL est supérieur à 15 % et de préférence supérieur à 20%.

La structure de bourrelet ainsi décrite dans les deux modes de réalisation précédents a l'avantage d'être très trapue ce qui renforce son aptitude à résister à un décoincement sous accélération transversale.

Avantageusement, le module d'extension à 10% des mélanges caoutchouteux bourrage, bande extérieure et protecteur est compris entre 5 et 15 MPa.

Un tel module d'extension permet d'utiliser des mélanges caoutchouteux d'hystérésis réduite par rapport aux mélanges caoutchouteux de bourrage utilisés usuellement ce qui offre un avantage en termes de résistance au roulement du pneumatique.

Selon un mode de réalisation alternatif, l'armature de carcasse comportant une pluralité d'éléments de renforcement de carcasse, disposés de façon adjacente et alignés circonférentiellement en au moins deux alignements circonférentiels, les éléments de renforcement d'un alignement circonférentiel étant ancrés dans les deux bourrelets par un retournement autour de la structure annulaire de renforcement, de manière à former dans chaque bourrelet un brin aller et un brin retour, chaque brin retour s'étendant radialement à l'extérieur jusqu'à une extrémité située à une distance radiale DRR du point radialement le plus à l'intérieur de la structure annulaire de renforcement du bourrelet, la distance radiale DRR est supérieure ou égale à 50% de la hauteur radiale H du pneumatique.

Cette structure de flancs et de bourrelets avec deux nappes carcasses a l'avantage d'être plus résistante aux chocs nid de poule.

Selon un mode de réalisation avantageux, chaque bourrelet comportant un mélange caoutchouteux appelé bourrage et un mélange caoutchouteux appelé protecteur, le bourrage étant situé radialement à l'extérieur de la structure annulaire de renforcement et au moins partiellement entre le brin aller et le brin retour de l'armature de carcasse, le protecteur étant destiné à entrer en contact avec un siège de jante, le module d'extension à 10% des mélanges caoutchouteux bourrage et protecteur est compris entre 5 et 15 MPa.

Comme pour le mode de réalisation précédent, un tel module d'extension permet d'utiliser des mélanges caoutchouteux d'hystérésis réduite par rapport aux mélanges caoutchouteux de bourrage utilisés usuellement ce qui offre un avantage en termes de résistance au roulement du pneumatique.

Selon l'invention, une lentille additionnelle de renfort est disposée au niveau des flancs entre la couche étanche et l'armature de carcasse, et cette lentille additionnelle de renfort est un mélange caoutchouteux avec une épaisseur maximale comprise entre 0,5 et 10 mm et de préférence entre 0,5 et 4 mm.

Une telle lentille additionnelle renforce la portance structurelle du pneumatique et augmente la durée de vie du pneumatique lors d'un roulage à plat, mais aussi augmente la résistance à un décoincement des bourrelets.

Préférentiellement, l'épaisseur maximale de la lentille additionnelle est comprise entre 0,5 et 2,5 mm pour ne pas pénaliser la résistance au roulement du pneumatique. Une telle épaisseur de lentille additionnelle ne permet pas d'éviter un contact entre le bourrelet et le flanc du pneumatique lors d'un roulage à plat, mais augmente sensiblement la durée de vie de ce pneumatique lors d'un roulage avec une pression de gonflage résiduelle de l'ordre de 0,1 bar par exemple et aussi renforce sensiblement la résistance au décoincement du bourrelet lors d'un roulage à plat.

Selon un mode de réalisation particulier, la couche de produit auto-obturant est disposée sur la couche étanche en regard du sommet.

Avantageusement, la couche de produit auto-obturant s'étend sur la couche étanche en regard d'au moins une partie des flancs.

La couche auto-obturante peut comporter au moins (pce signifiant parties en poids pour cent parties d'élastomère solide) un élastomère thermoplastique styrénique (dit « TPS ») et plus de 200 pce d'une huile d'extension dudit élastomère.

Le TPS peut être l'élastomère majoritaire de la couche auto-obturante.

L'élastomère TPS peut être choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Avantageusement, l'élastomère TPS est choisi dans le groupe constitué par les copolymères SEBS, les copolymères SEPS et les mélanges de ces copolymères.

Selon un autre mode de réalisation, la couche auto-obturante peut comporter au moins (pce signifiant parties en poids pour cent parties d'élastomère solide) :
(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 120 pce d'une charge.

L'élastomère diénique insaturé est avantageusement choisi dans le groupe constitué par les polybutadiènes, le caoutchouc naturel, les polyisoprènes de synthèse, les copolymères de butadiènes, les copolymères d'isoprène et les mélanges de tels élastomères.

L'élastomère diénique insaturé peut avantageusement être un élastomère isoprénique, de préférence choisi dans le groupe constitué par le caoutchouc naturel, les polyisoprènes de synthèse et les mélanges de tels élastomères.

Avantageusement, le taux d'élastomère diénique insaturé est supérieur à 50 pce, de préférence supérieur à 70 pce.

L'invention a aussi pour objet un ensemble comportant une roue et un pneumatique tel que précédemment décrit, tel qu'il comporte en plus un dispositif de mesure de la pression de gonflage de la cavité interne de l'ensemble roue et pneumatique.

Avec un tel ensemble, les cas de perte de pression de gonflage deviennent très rares et de plus dans un tel cas, la perte de pression est le plus souvent très lente. Le dispositif de mesure de la pression de gonflage permet d'alerter suffisamment tôt pour effectuer la réparation du pneumatique ou son changement avant que la pression de gonflage ne devienne très basse et ainsi avant tout endommagement de la structure du pneumatique.

Un tel dispositif peut être un capteur de pression fixé à la valve de la roue ou à la surface interne du pneumatique ou encore placé dans la structure de celui-ci.

L'invention concerne particulièrement les pneumatiques destinés à équiper des véhicules à moteur de type tourisme ainsi que SUV (*"Sport Utility Vehicles"*) et camionnettes.

### Description brève des dessins

L'invention ainsi que ses avantages seront aisément compris à la lumière de la description et des exemples de réalisation qui suivent ainsi que des figures annexées qui schématisent de manière simple, sans respect d'une échelle spécifique :
- la figure 1 représente, en coupe radiale, un quart d'un pneumatique selon l'art antérieur ;
- la figure 2 illustre comment est déterminée la hauteur H d'un pneumatique ;
- la figure 3 présente en coupe radiale une portion d'un autre pneumatique selon l'art antérieur ;
- la figure 4 présente une coupe radiale d'un premier mode de réalisation d'un pneumatique selon un objet de l'invention ;
- la figure 5 présente une section droite d'un premier mode de réalisation d'une tringle ;
- la figure 6 présente une section droite d'un second mode de réalisation d'une tringle ;
- la figure 7 présente une section droite d'un troisième mode de réalisation d'une tringle ;
- la figure 8 présente une coupe radiale d'un second mode de réalisation d'un pneumatique selon un objet de l'invention ; et
- la figure 9 présente un exemple de dispositif d'extrusion-mélangeage utilisable pour la fabrication d'une composition de produit auto-obturant.

### Description détaillée de l'invention

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial » lorsque le fil ou les éléments de renforcement de l'armature font avec la direction circonférentielle un angle supérieur ou égal à 80° et inférieur ou égal à 90°. Précisons que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec un mélange caoutchouteux.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale.

Deux éléments de renforcement sont dits « parallèles » dans ce document lorsque l'angle formé entre les deux éléments est inférieur ou égal à 20°.

Dans le cadre de ce document, l'expression « mélange caoutchouteux » désigne une composition de caoutchouc comportant au moins un élastomère et une charge.

### I. Architectures des pneumatiques

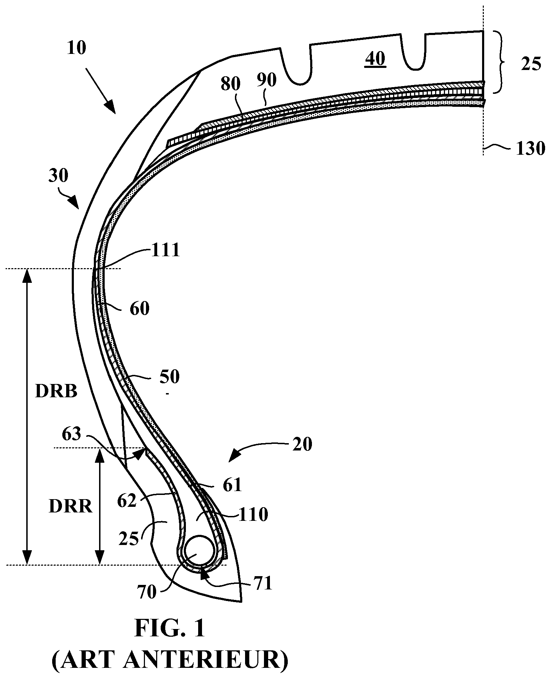

La figure 1 représente schématiquement, en coupe radiale, un quart de pneumatique 10 selon l'art antérieur. Le pneumatique 10 comporte deux bourrelets 20 destinés à entrer en contact avec une jante de montage (non représentée), chaque bourrelet 20 comportant une structure annulaire de renforcement, en l'occurrence une tringle 70. Deux flancs 30 prolongent les bourrelets 20 radialement vers l'extérieur et s'unissent dans un sommet 25 comprenant une armature de sommet formée d'une première couche de renforts 80 et d'une deuxième couche de renforts 90, et surmontée radialement d'une bande de roulement 40. Chaque couche de renforts comprend des renforts filaires, enrobés dans une matrice formée de mélange caoutchouteux. Les renforts de chaque couche de renforts sont substantiellement parallèles entre eux ; les renforts des deux couches sont croisés d'une couche à l'autre selon un angle d'environ 20°, comme cela est bien connu de la personne du métier pour les pneumatiques dits radiaux.

Le pneumatique 10 comporte encore une armature de carcasse 60 qui s'étend depuis les bourrelets 20 à travers les flancs 30 jusqu'au sommet 25. Cette armature de carcasse 60 comporte ici des renforts filaires orientés substantiellement radialement, c'est-à-dire faisant avec la direction circonférentielle un angle supérieur ou égal à 65° et inférieur ou égal à 90°.

L'armature de carcasse 60 comporte une pluralité d'éléments de renforcement de carcasse et est ancrée dans les deux bourrelets 20 par un retournement autour de la tringle 70, de manière à former dans chaque bourrelet un brin aller 61 et un brin retour 62. Le brin retour s'étend radialement à l'extérieur jusqu'à une extrémité 63 située à une distance radiale DRR du point 71 radialement le plus à l'intérieur de la structure annulaire de renforcement du bourrelet, la distance radiale DRR est usuellement supérieure ou égale à 15 % de la hauteur radiale H du pneumatique.

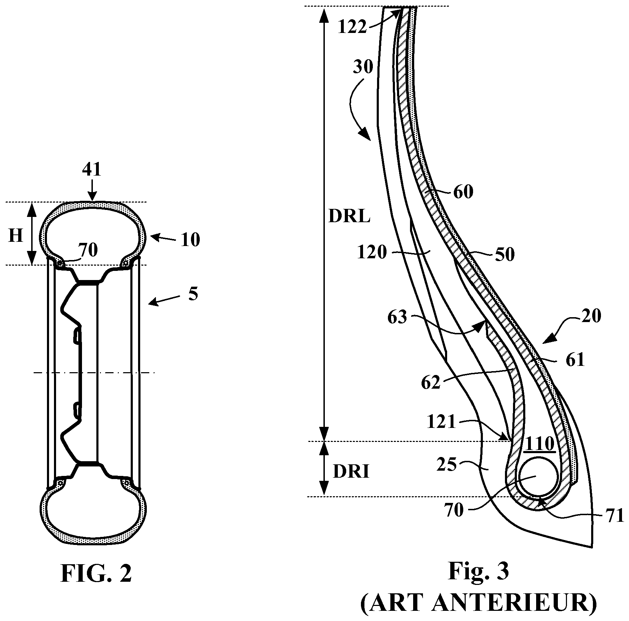

La « hauteur radiale » H d'un pneumatique est définie comme la distance radiale entre le point 71 radialement le plus à l'intérieur de la structure annulaire de renforcement 70 du bourrelet 20 et le point 41 (figure 2) radialement le plus à l'extérieur de la bande de roulement 40 lorsque le pneumatique 10 est monté sur une jante de montage 5 (comme cela est représenté à la figure 2) et gonflé à sa pression de service.

Chaque bourrelet comporte un bourrage 110, le bourrage étant situé radialement à l'extérieur de la tringle 70 et, pour une bonne partie, entre le brin aller 61 et le brin retour 62 de l'armature de carcasse 60.

Le bourrage 110 s'étend radialement à l'extérieur du point 71 radialement le plus à l'intérieur de la structure annulaire de renforcement du bourrelet, jusqu'au point 111 situé à une distance radiale DRB du point 71, la distance radiale DRB est usuellement supérieure ou égale à 20 % de la hauteur radiale H du pneumatique. En l'occurrence, le bourrage 110 s'étend jusqu'à l'équateur du pneumatique. Par « équateur » du pneumatique on entend, dans le cadre du présent document, la hauteur radiale du point de la plus grande extension axiale de l'armature de carcasse. Dans une coupe radiale du pneumatique, l'équateur apparaît comme la ligne droite axiale passant par les points où l'armature de carcasse a sa plus grande largeur axiale lorsque le pneumatique est monté sur la jante et gonflé. Lorsque l'armature de carcasse atteint cette plus grande largeur axiale en plusieurs points, on considère la hauteur radiale du point le plus proche de la mi-hauteur H/2 du pneumatique comme étant l'équateur du pneumatique. L'équateur ainsi défini ne doit pas être confondu avec le plan médian 130 du pneumatique qui est aussi parfois appelé « équateur » dans les documents de l'art antérieur. De préférence, DRB est choisi tel que le bourrage ne s'étend pas radialement à l'extérieur de l'équateur du pneumatique.

Les bourrelets 20 comportent aussi un mélange caoutchouteux 25 appelé « protecteur » destiné à entrer en contact avec un siège de jante. Le protecteur 25 est placé radialement intérieurement relativement à la structure annulaire de renforcement 70 et le retournement de l'armature de carcasse et s'étend axialement extérieurement de part et d'autre des brins aller 61 et retour 62 de l'armature de carcasse 60.

La structure annulaire de renforcement ou tringle est ici une tringle dite tressée, c'est-à-dire qu'elle comporte une âme en acier doux autour de laquelle sont enroulés un(des) fil(s) ou câble(s) sur une ou plusieurs couches.

La surface intérieure du pneumatique 10 est recouverte d'une couche étanche ou gomme intérieure 50.

Il est également connu de prévoir une bande extérieure 120 placée axialement à l'extérieur de l'armature de carcasse et du bourrage, comme dans le pneumatique représenté à la figure 3, voir le document WO 2010/072736 A1. Chaque bande extérieure s'étend radialement à l'extérieur d'une extrémité 121 radialement intérieure située à une distance radiale DRI du point 71 radialement le plus à l'intérieur de la structure annulaire de renforcement 70 du bourrelet, DRI étant usuellement inférieure ou égale à 20 % de la hauteur radiale H du pneumatique, jusqu'à une extrémité 122 radialement extérieure, la distance radiale DRL entre l'extrémité 122 radialement extérieure de la bande extérieure et l'extrémité 121 radialement intérieure de la bande extérieure étant supérieure ou égale à 30% de la hauteur radiale H du pneumatique.

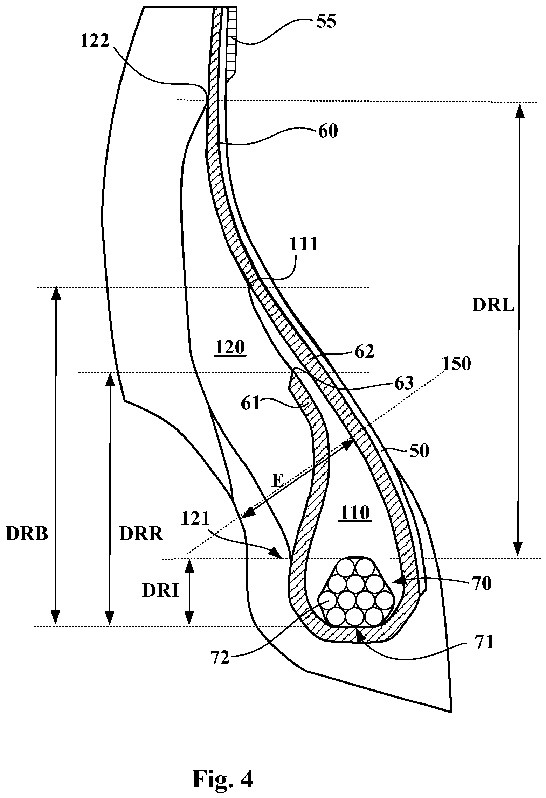

La figure 4 présente un premier mode de réalisation du pneumatique selon un des objets de l'invention. Ce pneumatique comporte une couche de produit auto-obturant 55 disposée sur une partie de la couche étanche ou gomme intérieure 50. Dans le cas d'espèce, la couche de produit auto-obturant est placée en regard du sommet 25 du pneumatique et s'étend axialement sur une grande partie des flancs 30. A la figure 4, seule l'extrémité de la couche 55 est représentée. Cette couche de produit auto-obturant 55 permet de traiter la plus grande partie des crevaisons en obturant celles-ci.

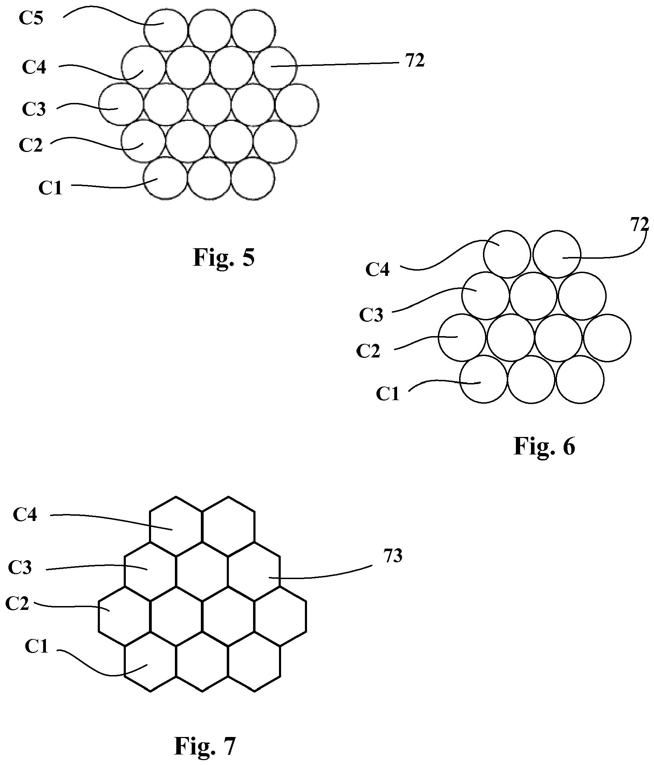

Ce pneumatique comporte aussi une tringle 70 formée de plusieurs enroulements d'un fil métallique unique 72, agencés axialement côte à côte en plusieurs couches (C1, C2, C3, C4) radialement superposées de façon à définir une section transversale hexagonale. L'assemblage de la tringle de la figure 4 correspond à une construction de quatre couches, en allant radialement de l'intérieur vers l'extérieur : 3-4-3-2. La couche C1 adjacente au point 71 comprend 3 enroulements disposés axialement côte à côte, puis la couche adjacente C2 est de 4 enroulements, puis C3 a 3 enroulements et la dernière couche C4 disposée le plus extérieurement radialement comprend deux alignements. La figure 6 correspond à cette construction.

Le fil métallique a un diamètre égal à 1,55 mm. Ce fil est gommé (non représenté).

La figure 5 présente un autre exemple d'enroulements préférentiel avec une construction à cinq couches (C1, C2, C3, C4 et C1) : 3-4-5-4-3. Cette construction comprend 19 enroulements et la précédente 12.

Le fil métallique 72 peut aussi avoir un diamètre de 1,3 mm. Dans ce cas, en fonction du dimensionnement du bourrelet et des efforts à supporter, le nombre et la répartition des enroulements circonférentiels est à adapter.

La figure 7 présente une section de tringle de construction similaire à celle de la figure 6, à quatre couches (C1, C2, C3 et C4) mais réalisée avec un fil métallique 73 de section droite hexagonale. L'utilisation de ce fil renforce la rigidité de torsion de la tringle sans augmenter sa masse.

La structure du bourrelet de ce pneumatique (Fig. 4) est similaire à celle de la figure 3 avec une seule nappe carcasse 60, un retournement de nappe carcasse dont les brins retour 62 s'étendent radialement à l'extérieur jusqu'à une extrémité 63 située à une distance radiale DRR du point 71 radialement le plus à l'intérieur de la tringle 70. La distance radiale DRR est supérieure ou égale à 7% et inférieure ou égale à 30% de la hauteur radiale H du pneumatique. Le bourrelet comprend aussi un bourrage 110 qui s'étend radialement extérieurement jusqu'à une distance radiale DRB du point 71. La distance radiale DRB est comprise entre 20 et 45% de la hauteur radiale H du pneumatique. Le bourrelet comprend aussi une bande extérieure 120 dont l'extrémité 121 radialement intérieure est située à une distance radiale DRI du point 71, DRI est comprise entre 1 et 10% de la hauteur radiale H. L'étendue radiale DRL, distance radiale entre les deux extrémités 121 et 122, est comprise entre 35 et 50% de la hauteur radiale H du pneumatique.

Le bourrelet comprend aussi un mélange caoutchouteux appelé protecteur 25 destiné à entrer en contact avec un siège de jante. Ce protecteur s'étend en partie axialement extérieurement relativement à la bande extérieure 120.

L'ensemble formé par les mélanges caoutchouteux bourrage, bande extérieure et protecteur présente une épaisseur maximale E, mesurée dans tout plan radial dans une direction 150 perpendiculaire au brin aller 61 de l'armature de carcasse. Cette épaisseur maximale E est telle que le rapport E/DRL est supérieur à 15% et de préférence supérieur à 20%. Dans le cas présenté, ce rapport est de l'ordre de 28 %.

Ce facteur de forme D/DRL élevé montre que la structure du bourrelet est très trapue ce qui couplé à la nature très rigide en torsion de la structure annulaire de renforcement permet de procurer au pneumatique une excellente résistance au décoincement de ces bourrelets lors d'un roulage à plat.

De préférence, les mélanges caoutchouteux précédents ont un module d'extension à 10% compris entre 5 et 15 MPa. Ces valeurs relativement faibles permettent d'utiliser des mélanges d'hystérésis réduite ce qui offre un avantage en termes de résistance au roulement du pneumatique.

Par module d'extension à 10%, on entend un module sécant d'extension à 10% de déformation et à température ambiante (23°C), la mesure est réalisée après un premier cycle d'accommodation jusqu'à 10 % de déformation.

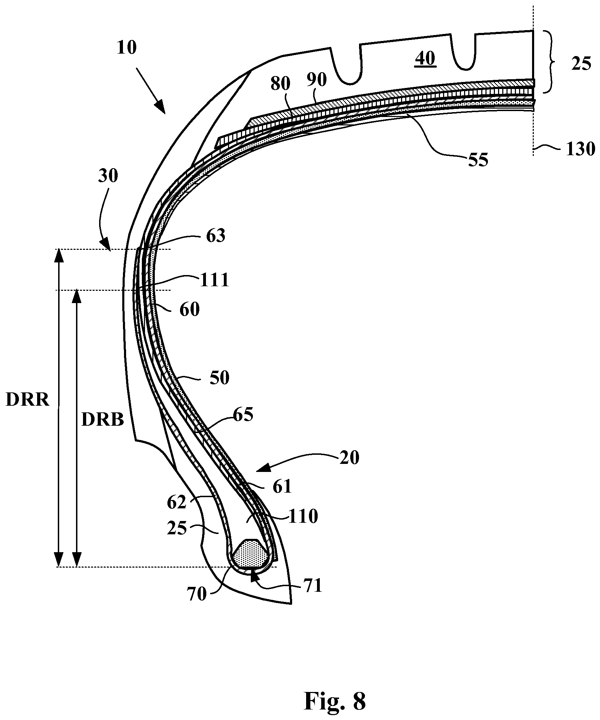

La figure 8 présente un mode de réalisation alternatif d'un pneumatique selon un des objets de l'invention.

Une couche de produit auto-obturant 55 est disposée sur une partie de la gomme intérieure 50. Dans le cas d'espèce, la couche de produit auto-obturant est placée en regard du sommet 25 du pneumatique et s'étend axialement jusqu'aux flancs 30 du pneumatique.

L'armature de carcasse comporte un premier alignement circonférentiel de renforts 60 ou première nappe carcasse, ancré dans le bourrelet 20 par un retournement autour de la tringle 70, et un second alignement circonférentiel de renforts ou seconde nappe carcasse 65. Cette seconde nappe carcasse 65 s'étend sensiblement entre la structure annulaire de renforcement 70 et le sommet. Il s'agit de deux demi carcasses. Son intérêt est de renforcer la résistance à un choc nid de poule ou pincement du pneumatique.

La structure du bourrelet 20 comporte comme précédemment une tringle 70 formée de plusieurs enroulements d'un fil métallique unique 72, agencés axialement côte à côte en plusieurs couches radialement superposées de façon à définir une section transversale hexagonale. Les figures 5 présentent des structures d'enroulements préférentiels pour ce mode de réalisation.

Les brins retour 62 s'étendent radialement à l'extérieur jusqu'à une extrémité 63 située à une distance radiale DRR du point 71 radialement le plus à l'intérieur de la structure annulaire de renforcement du bourrelet, la distance radiale DRR est supérieure ou égale à 50% de la hauteur radiale H du pneumatique. Cette valeur très élevée de la distance radiale DRR, associée à la forte rigidité de torsion de la tringle 70 permet d'obtenir une excellente résistance au décoincement en roulage à plat de ce pneumatique.

Le bourrelet 20 comporte aussi un mélange caoutchouteux appelé protecteur 25 et comme précédemment, les modules d'extension à 10 % des bourrage et protecteur sont compris entre 5 et 15 MPa.

Cela offre un avantage en termes de résistance au roulement du pneumatique.

### II. Couche de produit auto-obturant

Dans ce qui suit, sauf indication expresse différente, tous les pourcentages (%) indiqués sont des % en masse.

D'autre part, tout intervalle de valeurs désigné par l'expression « entre a et b » représente le domaine de valeurs supérieur à « a » et inférieur à « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (en anglais *"*phr*"*) signifie parties en poids pour cent parties d'élastomère à l'état solide (du total des élastomères solides si plusieurs élastomères solides sont présents).

Par l'expression composition « à base de », il faut entendre de manière générale une composition comportant le mélange et/ou le produit de réaction de ses différents composants, certains de ces composants pouvant être susceptibles de (voire destinés à) réagir entre eux, au moins en partie, lors des différentes phases de fabrication de la composition, par exemple au cours de son éventuelle réticulation ou vulcanisation (cuisson) finale.

### II-1. Couche de produit auto-obturant à base d'un élastomère thermoplastique styrénique

Selon un mode de réalisation, la couche auto-obturante 55 comporte un élastomère thermoplastique styrénique (dit « TPS ») et plus de 200 pce d'une huile d'extension de l'élastomère. Les élastomères thermoplastiques styréniques sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

L'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, l'élastomère est choisi dans le groupe constitué par les copolymères SEBS, les copolymères SEPS et les mélanges de ces copolymères.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Des exemples de telles couches auto-obturantes et de leurs propriétés sont divulgués dans les documents FR 2 910 382, FR 2 910 478 et FR 2 925 388.

Une telle couche auto-obturante peut être préformée par extrusion d'un profilé plat aux dimensions appropriées pour son application sur un tambour de fabrication. Un exemple de réalisation est présenté dans le document FR 2 925 388.

### II-2. Couche de produit auto-obturant à base d'élastomère diénique

Selon un autre exemple de réalisation, la couche auto-obturante 55 est constituée d'une composition élastomère comportant au moins, à titre d'élastomère majoritaire (préférentiellement pour plus de 50 pce), un élastomère diénique insaturé, entre 30 et 90 pce d'une résine hydrocarbonée et un plastifiant liquide de température de transition vitreuse ou Tg inférieure à -20°C, à un taux compris entre 0 et 60 pce (pce signifiant parties en poids pour cent parties d'élastomère solide). Elle a pour autre caractéristique essentielle d'être dépourvue de charge ou d'en comporter moins de 120 pce.

### • Élastomère diénique

Par élastomère ou caoutchouc « diénique », on rappelle que doit être compris, de manière connue, un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories, saturés ou insaturés. On entend dans la présente demande par élastomère diénique « insaturé » (ou « essentiellement insaturé ») un élastomère diénique issu au moins en partie de monomères diènes conjugués et ayant un taux de motifs ou unités issus de diènes conjugués qui est supérieur à 30% (% en moles) ; c'est ainsi que sont exclus de cette définition des élastomères diéniques tels que les caoutchoucs butyl ou les copolymères de diènes et d'alpha-oléfines type EPDM qui peuvent être qualifiés d'élastomères diéniques « saturés » ou « essentiellement saturés » en raison de leur taux réduit de motifs d'origine diénique (toujours inférieur à 15% en moles).

On utilise préférentiellement un élastomère diénique insaturé dont le taux (% en moles) de motifs d'origine diénique (diènes conjugués) est supérieur à 50%, un tel élastomère diénique étant plus préférentiellement choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (bien entendu, autres que caoutchouc butyl) et les mélanges de tels élastomères.

Par opposition à des élastomères diéniques du type liquide, l'élastomère diénique insaturé de la composition est par définition solide. De préférence, sa masse moléculaire moyenne en nombre (Mn) est comprise entre 100 000 et 5 000 000, plus préférentiellement entre 200 000 et 4 000 000 g/mol. La valeur Mn est déterminée de manière connue, par exemple par SEC : solvant tétrahydrofurane ; température 35°C; concentration 1 g/l ; débit 1 ml/min ; solution filtrée sur filtre de porosité 0,45 µm avant injection ; étalonnage de Moore avec des étalons (polyisoprène) ; jeu de 4 colonnes « WATERS » en série (« STYRAGEL » HMW7, HMW6E, et 2 HT6E) ; détection par réfractomètre différentiel (« WATERS 2410 ») et son logiciel d'exploitation associé (« WATERS EMPOWER »).

Plus préférentiellement, l'élastomère diénique insaturé de la composition de la couche auto-obturante est un élastomère isoprénique. Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères.

Cet élastomère isoprénique est de préférence du caoutchouc naturel ou un polyisoprène cis-1,4 de synthèse; parmi ces polyisoprènes de synthèse, sont utilisés préférentiellement des polyisoprènes ayant un taux (% molaire) de liaisons cis-1,4 supérieur à 90%, plus préférentiellement encore supérieur à 95%, notamment supérieur à 98%.

L'élastomère diénique insaturé ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition, le taux d'élastomère diénique insaturé (solide), notamment d'élastomère isoprénique tel que caoutchouc naturel, est supérieur à 50 pce, plus préférentiellement supérieur à 70 pce. Plus préférentiellement encore, ce taux d'élastomère diénique insaturé, notamment d'élastomère isoprénique tel que caoutchouc naturel, est supérieur à 80 pce.

Selon un mode de réalisation particulier, la couche de produit auto-obturant comporte, préférentiellement à titre d'élastomère majoritaire, un coupage (ou « mélange ») d'au moins deux élastomères solides :
- au moins un (c'est-à-dire un ou plusieurs) polybutadiène ou copolymère de butadiène, dit "élastomère A", et
- au moins un (c'est-à-dire un ou plusieurs) caoutchouc naturel ou polyisoprène de synthèse, dit "élastomère B".

Comme polybutadiènes, on peut citer notamment ceux ayant une teneur en unités -1,2 comprise entre 4% et 80% ou ceux ayant une teneur en cis-1,4 supérieure à 80%. Comme copolymères de butadiène, on peut citer notamment les copolymères de butadiène-styrène (SBR), les copolymères de butadiène-isoprène (BIR), les copolymères de styrène-butadiène-isoprène (SBIR). Conviennent notamment les copolymères SBR ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères BIR ayant une teneur en isoprène comprise entre 5% et 90% en poids et une Tg de -40°C à -80°C, les copolymères SBIR ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans - 1,4 de la partie isoprénique comprise entre 10% et 50%, et plus généralement tout copolymère SBIR ayant une Tg comprise entre -20°C et -70°C.

Plus préférentiellement encore, l'élastomère A est un homopolymère de butadiène, en d'autres termes un polybutadiène (BR), ce polybutadiène ayant préférentiellement un taux (% molaire) de liaison cis-1,4 supérieur à 90%, plus préférentiellement supérieur à 95%.

L'élastomère B est du caoutchouc naturel ou un polyisoprène de synthèse ; parmi les polyisoprènes de synthèse, sont utilisés préférentiellement des polyisoprènes cis-1,4, préférentiellement ceux ayant un taux (% molaire) de liaisons cis-1,4 supérieur à 90%, plus préférentiellement encore supérieur à 95%, notamment supérieur à 98%.

Les élastomères A et B ci-dessus peuvent être par exemple à blocs, statistiques, séquencés, microséquencés, et être préparés en dispersion ou en solution ; ils peuvent être couplés et/ou étoilés et/ou branchés ou encore fonctionnalisés, par exemple avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Selon un mode de réalisation préférentiel, le rapport pondéral élastomère A : élastomère B est préférentiellement compris dans un domaine de 20:80 à 80:20, plus préférentiellement encore compris dans un domaine de 30:70 à 70:30, en particulier de 40:60 à 60:40.

C'est dans de tels domaines de concentrations respectives des deux élastomères A et B que l'on a observé, selon les différentes utilisations particulières visées, les meilleurs compromis en termes de propriétés auto-obturantes et de température d'utilisation, en particulier lors d'une utilisation à basse température (notamment inférieure à 0°C), comparativement à l'utilisation de caoutchouc naturel seul ou de polybutadiène seul.

Les élastomères A et B sont par définition solides. Par opposition à liquide, on entend par solide toute substance n'ayant pas la capacité de prendre à terme, au plus tard au bout de 24 heures, sous le seul effet de la gravité et à température ambiante (23°C), la forme du récipient qui la contient.

Par opposition à des élastomères du type liquides utilisables éventuellement comme plastifiants liquides dans la composition de l'invention, les élastomères A et B et leur coupage se caractérisent par une viscosité très élevée : leur viscosité Mooney à l'état cru (i.e., non réticulé) ML (1+4), mesurée à 100°C, est de préférence supérieure à 20, plus préférentiellement supérieure à 30, en particulier comprise entre 30 et 130.

Pour rappel, la viscosité ou plasticité Mooney caractérise de manière connue des substances solides. On utilise un consistomètre oscillant tel que décrit dans la norme ASTM D1646 (1999). La mesure de plasticité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton-mètre).

Selon une autre définition possible, on entend également par élastomère solide un élastomère à haute masse molaire, c'est-à-dire présentant typiquement une masse molaire moyenne en nombre (Mn) qui est supérieure à 100 000 g/mol ; de préférence, dans un tel élastomère solide, au moins 80%, plus préférentiellement au moins 90% de l'aire de la distribution des masses molaires (mesurée par SEC) est située au-delà de 100 000 g/mol.

De préférence, la masse molaire moyenne en nombre (Mn) de chacun des élastomères A et B est comprise entre 100 000 et 5 000 000 g/mol, plus préférentiellement entre 150 000 et 4 000 000 g/mol ; en particulier elle est comprise entre 200 000 et 3 000 000 g/mol, plus particulièrement entre 200 000 et 1 500 000 g/mol. Préférentiellement, leur indice de polymolécularité Ip (Mw/Mn) est compris entre 1,0 et 10,0, en particulier compris entre 1,0 et 3,0 en ce qui concerne l'élastomère A, entre 3,0 et 8,0 en ce qui concerne l'élastomère B.

L'homme du métier saura ajuster, à la lumière de la présente description et en fonction de l'application particulière visée pour la composition de l'invention, la masse molaire moyenne et/ou la distribution des masses molaires des élastomères A et B. Selon un mode de réalisation particulier de l'invention, il pourra par exemple opter pour une large distribution de masses molaires. S'il souhaite privilégier la fluidité de la composition auto-obturante, il pourra favoriser plutôt la proportion de basses masses molaires. Selon un autre mode de réalisation particulier, combinable ou non au précédent, il pourra aussi privilégier la proportion de masses molaires intermédiaires en vue d'optimiser plutôt la fonction d'auto-obturation (remplissage) de la composition. Selon un autre mode de réalisation particulier, il pourra privilégier plutôt la proportion de hautes masses molaires en vue d'augmenter la tenue mécanique de la composition auto-obturante.

L'obtention de ces différentes distributions de masses molaires pourra se faire par exemple par mélangeage d'élastomères diéniques (élastomères A et/ou élastomères B) de départ différents.

Selon un mode de réalisation préférentiel de la couche auto-obturante, le coupage d'élastomères solides A et B ci-dessus constitue le seul élastomère solide présent dans la composition auto-obturante de l'invention, c'est-à-dire que le taux global des deux élastomères A et B est alors de 100 pce ; en d'autres termes, les taux d'élastomère A et d'élastomère B sont par conséquent chacun compris dans un domaine de 10 à 90 pce, de préférence de 20 à 80 pce, plus préférentiellement de 30 à 70 pce, en particulier de 40 à 60 pce.

Selon un autre mode de réalisation particulier de la couche auto-obturante, lorsque le coupage d'élastomères A et B ne constitue pas le seul élastomère solide de la composition de l'invention, ledit coupage constitue préférentiellement l'élastomère solide majoritaire en poids dans la composition de l'invention ; plus préférentiellement, le taux global des deux élastomères A et B est alors supérieur à 50 pce, plus préférentiellement supérieur à 70 pce, en particulier supérieur à 80 pce.

Ainsi, selon des modes de réalisation particuliers de l'invention, le coupage d'élastomères A et B pourrait être associé à d'autres élastomères (solides) minoritaires en poids, qu'il s'agisse d'élastomères diéniques insaturés ou saturés (par exemple butyl), ou encore d'élastomères autres que diéniques, par exemple des élastomères thermoplastiques styréniques (dits "TPS"), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

De manière surprenante, le coupage d'élastomères A et B ci-dessus, non chargé (ou très faiblement chargé), s'est révélé capable, après ajout d'une résine hydrocarbonée thermoplastique dans le domaine étroit préconisé, de remplir la fonction d'une composition auto-obturante performante.

### • Résine hydrocarbonée

Le deuxième constituant essentiel de la composition auto-obturante selon ce second mode de réalisation est une résine hydrocarbonée.

La dénomination « résine » est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de la couche auto-obturante, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 60°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de la couche auto-obturante, la résine hydrocarbonée présente au moins une (quelconque), plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une (quelconque), plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Ball"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé (« WATERS EMPOWER »).

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5 et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme « terpène » regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination « Dercolyte » pour ce qui concerne les résines polylimonène, par la société Neville Chemical Company sous dénomination « Super Nevtac » ou par Kolon sous dénomination « Hikorez » pour ce qui concerne les résines coupe C₅/ styrène ou résines coupe C₅/ coupe C₉, ou encore par la société Struktol sous dénomination « 40 MS » ou « 40 NS » ou par la société Exxon Mobil sous dénomination « Escorez » (mélanges de résines aromatiques et/ou aliphatiques).

### • Charge

La composition de couche auto-obturante selon ce second mode de réalisation a pour autre caractéristique essentielle de comporter de 0 à moins de 120 pce d'au moins une (c'est-à-dire une ou plusieurs) charge, dont 0 à moins de 30 pce d'au moins une (c'est-à-dire une ou plusieurs) charge renforçante.

Par charge, on entend ici tout type de charge, qu'elle soit renforçante (typiquement à particules nanométriques, et préférentiellement de taille moyenne en poids inférieure à 500 nm, notamment entre 20 et 200 nm) ou qu'elle soit non-renforçante ou inerte (typiquement à particules micrométriques, et préférentiellement de taille moyenne en poids supérieure à 1 µm, par exemple entre 2 et 200 µm). La taille moyenne en poids étant mesurée de manière bien connue de l'homme du métier (à titre d'exemple, selon la demande WO2009/083160 paragraphe I.1).

A titre d'exemples de charges connues comme renforçantes par l'homme du métier, on citera notamment du noir de carbone ou une charge inorganique renforçante telle que la silice en présence d'un agent de couplage, ou un coupage de ces deux types de charge. En effet, de manière connue, la silice est une charge renforçante en présence d'un agent de couplage lui permettant de se lier à l'élastomère.

Comme noirs de carbone, par exemple, conviennent tous les noirs de carbone, notamment les noirs conventionnellement utilisés dans les bandages pneumatiques. Parmi ces derniers, on citera par exemple les noirs de carbone de grade (ASTM) 300, 600, 700 ou 900 (par exemple N326, N330, N347, N375, N683, N772, N990). Comme charges inorganiques renforçantes conviennent notamment des charges minérales hautement dispersibles du type silice (SiO₂), notamment les silices précipitées ou pyrogénées présentant une surface BET inférieure à 450 m²/g, de préférence de 30 à 400 m²/g.

A titre d'exemples de charges autres que renforçantes, ou charges inertes connues par l'homme du métier, on citera notamment celles choisies dans le groupe constitué par les cendres (i.e., résidus de combustion), les microparticules de carbonates de calcium naturels (craie) ou synthétiques, les silicates synthétiques ou naturels (tels que kaolin, talc, mica, cloisite), les silices (en l'absence d'agent de couplage), les oxydes de titane, les alumines, les aluminosilicates (argile, bentonite), et leurs mélanges. Des charges colorantes ou colorées par exemple par des pigments pourront être avantageusement utilisées pour colorer la composition selon la couleur désirée. Préférentiellement, la composition de l'invention comporte une charge autre que renforçante choisie parmi le groupe constitué par la craie, le talc, le kaolin et leurs mélanges.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

Ces charges, renforçantes ou autres, sont habituellement là pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère diénique tel que du caoutchouc naturel ou du polybutadiène.

L'homme de l'art saura, à la lumière de la présente description, ajuster le taux de charge de la composition de l'invention afin d'atteindre les niveaux de propriétés souhaités et adapter la formulation à l'application spécifique envisagée. Préférentiellement, la composition de l'invention comporte de 0 à moins de 100 pce de charge, de préférence de 0 à moins de 70 pce de charge, dont 0 à moins de 15 pce de charge renforçante, de préférence 0 à moins de 10 pce de charge renforçante.

Plus préférentiellement encore, la composition de l'invention comporte de 0 à 70 pce de charge dont 0 à moins de 5 pce de charge renforçante. De manière très préférentielle, la composition de l'invention comporte une charge autre que renforçante, à un taux pouvant aller de 5 à 70 pce, de préférence de 10 à 30 pce.

Selon l'application envisagée, l'invention peut notamment se décliner en deux modes de réalisation, selon le taux de charge. En effet, une quantité de charge trop élevée, pénalise les propriétés requises de souplesse, de déformabilité et d'aptitude au fluage, tandis que la présence d'une certaine quantité de charge (par exemple de 30 à moins de 120 pce), permet d'améliorer la processabilité, et de diminuer le coût.

Ainsi, selon un premier mode particulier de réalisation, la composition est très faiblement chargée, c'est-à-dire qu'elle comporte de 0 à moins de 30 pce de charge au total (dont 0 à moins de 30 pce de charge renforçante), préférentiellement 0 à moins de 30 pce de charge, dont 0 à moins de 15 pce de charge renforçante (plus préférentiellement 0 à moins de 10 pce de charge renforçante). Selon ce premier mode de réalisation, cette composition a pour avantage de permettre une composition auto-obturante ayant de bonnes propriétés anti-crevaison à froid et à chaud.

De manière plus préférentielle selon ce premier mode particulier de réalisation, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

Préférentiellement également selon ce premier mode particulier de réalisation, si une charge autre que renforçante est utilisée, son taux est de préférence de 5 à moins de 30 pce, en particulier de 10 à moins de 30 pce.

Par ailleurs, selon un second mode particulier de réalisation, préférentiel, la composition comporte de 30 à moins de 120 pce de charge, préférentiellement de plus de 30 à moins de 100 pce, et plus préférentiellement de 35 à 80 pce, dont, selon ce second mode de réalisation, 0 à moins de 30 pce de charge renforçante (plus préférentiellement de 0 à moins de 15 pce). Selon ce second mode particulier de réalisation, cette composition a pour avantage d'améliorer la processabilité, et de diminuer le coût tout en n'étant pas trop pénalisée quant à ses propriétés de souplesse, de déformabilité et d'aptitude au fluage. Par ailleurs, ce second mode de réalisation confère à la composition une performance anti-crevaison nettement améliorée.

De manière préférentielle selon ce second mode particulier de réalisation, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

Préférentiellement selon ce second mode particulier de réalisation, le taux de charge autre que renforçante est de 5 à moins de 120 pce, en particulier de 10 à moins de 100 pce et plus préférentiellement de 15 à 80 pce. De manière très préférentielle, le taux de charge autre que renforçante est compris dans un domaine allant de 25 à 50 pce, plus préférentiellement encore de 30 à 50 pce.

### • Plastifiant liquide

La composition de la couche de produit auto-obturante selon le second mode de réalisation peut comporter en outre, à un taux inférieur à 60 pce (en d'autres termes entre 0 et 60 pce), un agent plastifiant liquide (à 23°C) dit « à basse Tg » dont la fonction est notamment de ramollir la matrice en diluant l'élastomère diénique et la résine hydrocarbonée, améliorant en particulier les performances d'auto-obturation « à froid » (c'est-à-dire typiquement pour une température inférieure à 0°C) ; sa Tg est par définition inférieure à -20°C, elle est de préférence inférieure à -40°C.

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines hydrocarbonées qui sont par nature solides à température ambiante.

Conviennent notamment des élastomères liquides à faible masse moléculaire moyenne en nombre (Mn), typiquement comprise entre 300 et 90 000, plus généralement entre 400 et 50 000, par exemple sous la forme de caoutchouc naturel dépolymérisé, de BR, SBR ou IR liquides, tels que décrits par exemple dans les documents brevet US 4 913 209, US 5 085 942 et US 5 295 525 précités. Peuvent être également utilisés des mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité, hydrogénées ou non), les huiles aromatiques ou DAE (*Distillate Aromatic Extracts*), les huiles MES (*Medium Extracted Solvates*), les huiles TDAE (*Treated Distillate Aromatic Extracts*), les huiles minérales, les huiles végétales (et leurs oligomères, e.g. huiles de colza, soja, tournesol) et les mélanges de ces huiles.

Selon un mode de réalisation particulier, on utilise par exemple une huile du type polybutène, en particulier une huile polyisobutylène (en abrégé « PIB »), qui a démontré un excellent compromis de propriétés comparativement aux autres huiles testées, notamment à une huile conventionnelle du type paraffinique. A titre d'exemples, des huiles PIB sont commercialisées notamment par la société UNIVAR sous la dénomination « Dynapak Poly » (e.g. « Dynapak Poly 190 »), par BASF sous les dénominations « Glissopal » (e.g. « Glissopal 1000 ») ou « Oppanol » (e.g. « Oppanol B12 ») ; des huiles paraffiniques sont commercialisées par exemple par EXXON sous la dénomination « Telura 618 » ou par Repsol sous la dénomination « Extensol 51 ».

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse moléculaire moyenne en nombre (Mn) du plastifiant liquide est préférentiellement comprise entre 400 et 25 000 g/mol, plus préférentiellement encore comprise entre 800 et 10 000 g/mol. Pour des masses Mn trop basses, il existe un risque de migration du plastifiant à l'extérieur de la composition, tandis que des masses trop élevées peuvent entraîner une rigidification excessive de cette composition. Une masse Mn comprise entre 1 000 et 4 000 g/mol s'est avérée constituer un excellent compromis pour les applications visées, en particulier pour une utilisation dans un pneumatique.

La masse moléculaire moyenne en nombre (Mn) du plastifiant peut être déterminée de manière connue, notamment par SEC, l'échantillon étant préalablement solubilisé dans du tétrahydrofuranne à une concentration d'environ 1 g/l; puis la solution est filtrée sur filtre de porosité 0,45µm avant injection. L'appareillage est la chaîne chromatographique « WATERS alliance ». Le solvant d'élution est le tétrahydrofuranne, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses moléculaires moyennes calculées sont relatives à une courbe d'étalonnage réalisée avec des étalons de polystyrène.

En résumé, le plastifiant liquide est préférentiellement choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction des conditions particulières d'usage de la composition auto-obturante, notamment du pneumatique dans lequel elle est destinée à être utilisée.

De préférence, le taux de plastifiant liquide est compris dans un domaine de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

### • Additifs divers

Les constituants de base de la couche auto-obturante précédemment décrits, à savoir élastomère diénique insaturé, résine plastifiante hydrocarbonée, plastifiant liquide et charge optionnels sont suffisants à eux seuls pour que la composition auto-obturante remplisse totalement sa fonction anti-crevaison vis-à-vis des pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante.

Selon un mode de réalisation préférentiel du second mode de réalisation de la composition de la couche de produit auto-obturant, la composition auto-obturante comporte en outre un système de réticulation de l'élastomère diénique insaturé pouvant être constitué d'un seul ou plusieurs composés. Cet agent de réticulation est préférentiellement un agent de réticulation à base de soufre et/ou d'un donneur de soufre. En d'autres termes, cet agent de réticulation est un agent dit "de vulcanisation".

Selon un mode de réalisation préférentiel, l'agent de vulcanisation comporte du soufre et, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG. Le taux de soufre est par exemple compris entre 0,1 et 1,5 pce, en particulier entre 0,2 et 1,2 pce (notamment entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit agent de réticulation ou vulcanisation ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce.

Toutefois, de manière générale, si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC"), 1-phényl-2,4-dithiobiuret ("DTB"), dibuthylphosphorodithioate de zinc ("ZBPD"), 2-éthylhexylphosphorodithioate de zinc ("ZDT/S"), disulfure de bis O,O-di(2-éthylhexyl)-thiophosphonyle ("DAPD"), dibutylthiourée ("DBTU"), isopropyl-xanthate de zinc ("ZIX") et les mélanges de ces composés. Selon un autre mode de réalisation avantageux, le système de vulcanisation ci-dessus peut être dépourvu de zinc ou d'oxyde de zinc (connus comme activateurs de vulcanisation), ou tout au plus en comporter moins de 1 pce, plus préférentiellement moins de 0,5 pce.

Selon un autre mode de réalisation particulier préférentiel de l'invention, l'agent de vulcanisation comporte un donneur de soufre. La quantité d'un tel donneur de soufre sera ajustée de préférence entre 0,5 et 15 pce, plus préférentiellement entre 0,5 et 10 pce (notamment entre 1 et 5 pce), notamment de manière à atteindre les taux de soufre équivalents préférentiels indiqués précédemment.

Les donneurs de soufre sont bien connus de l'homme du métier, on citera notamment les polysulfures de thiurame, connus accélérateurs de vulcanisation et ayant pour formule (I) : 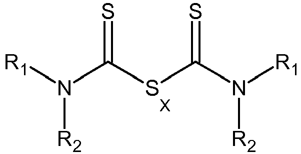 dans laquelle :
- x est un nombre (entier, ou décimal dans le cas de mélanges de polysulfures) qui est égal ou supérieur à deux, de préférence compris dans un domaine de 2 à 8 ;
- R₁ et R₂, identiques ou différents, représentent un radical hydrocarboné, de préférence choisi parmi les alkyles ayant 1 à 6 atomes de carbone, les cycloalkyles ayant 5 à 7 atomes de carbone, les aryles, aralkyles ou alkaryles ayant 6 à 10 atomes de carbone.

Dans la formule (I) ci-dessus, R₁ et R₂ pourraient former un radical hydrocarboné bivalent comportant 4 à 7 atomes de carbone.

Ces polysulfures de thiurame sont choisis plus préférentiellement dans le groupe constitué par le disulfure de tétrabenzylthiurame ("TBzTD"), le disulfure de tétraméthylthiurame ("TMTD"), le tétrasulfure de dipentaméthylènethiurame ("DPTT"), et les mélanges de tels composés. Plus préférentiellement est utilisé le TBzTD, particulièrement aux taux préférentiels indiqués ci-dessus pour un donneur de soufre (soit entre 0,1 et 15 pce, plus préférentiellement entre 0,5 et 10 pce, notamment entre 1 et 5 pce).

Outre les élastomères solides et autres additifs précédemment décrits, la composition de l'invention pourrait aussi comporter, préférentiellement selon une fraction pondérale minoritaire par rapport au coupage d'élastomères solides A et B, des polymères solides autres que des élastomères, tels que par exemple des polymères thermoplastiques.

Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

### • Fabrication de la couche de produit auto-obturant

La composition de la couche auto-obturante selon le second mode de réalisation précédemment décrit peut être fabriquée par tout moyen approprié, par exemple par mélangeage et/ou malaxage dans des mélangeurs à palette ou à cylindres, jusqu'à obtention d'un mélange intime et homogène de ses différents composants.

Toutefois, le problème de fabrication suivant peut se poser : en l'absence de charge, ou tout au moins d'une quantité notable de charge, la composition est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage, qui peut être rédhibitoire dans des conditions de mise en oeuvre industrielle.

Pour pallier les problèmes ci-dessus, la composition auto-obturante, lorsqu'elle comporte un système de vulcanisation, peut être préparée selon un procédé comportant les étapes suivantes :
a) on fabrique dans un premier temps un masterbatch comportant au moins l'élastomère diénique insaturé ou selon le cas le coupage des élastomères solides A et B et entre 30 et 90 pce de la résine hydrocarbonée, en mélangeant ces différents composants dans un mélangeur, à une température ou jusqu'à une température dite « température de mélangeage à chaud » (ou « première température ») qui est supérieure à la température de ramollissement de la résine hydrocarbonée ;
b) puis on incorpore audit masterbatch au moins le système de réticulation, en mélangeant le tout, dans le même mélangeur ou dans un mélangeur différent, à une température ou jusqu'à une température dite « seconde température » qui est maintenue inférieure à 100°C, pour l'obtention de ladite composition auto-obturante.

Les première et seconde températures ci-dessus sont bien entendues celles du masterbatch et de la composition auto-obturante, respectivement, mesurables in situ et non pas les températures de consigne des mélangeurs eux-mêmes.

Par « masterbatch » (ou « mélange-maître ») doit être entendu ici, par définition, le mélange d'au moins l'élastomère diénique et de la résine hydrocarbonée, mélange précurseur de la composition auto-obturante finale, prête à l'emploi.

Le plastifiant liquide peut être incorporé à tout moment, en tout ou partie, notamment au cours de la fabrication du masterbatch lui-même (dans ce cas, avant, pendant ou après incorporation de la résine hydrocarbonée dans l'élastomère diénique), « à chaud » (c'est-à-dire à température supérieure à la température de ramollissement de la résine) comme à une température plus basse, ou par exemple après la fabrication du masterbatch (dans ce cas, avant, pendant ou après ajout du système de réticulation).

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Un tel procédé s'est avéré particulièrement bien adapté à la fabrication rapide, dans des conditions de mise en oeuvre acceptables du point de vue industriel, d'une composition auto-obturante performante, cette composition pouvant comporter des taux élevés de résine hydrocarbonée sans nécessiter notamment l'emploi d'un plastifiant liquide à un taux particulièrement élevé.

C'est au cours de l'étape a) de mélangeage à chaud que l'élastomère diénique est mis au contact de la résine hydrocarbonée pour fabrication du masterbatch. A l'état initial, c'est-à-dire avant son contact avec l'élastomère, la résine peut se présenter à l'état solide ou à l'état liquide. De préférence, pour un meilleur mélangeage, l'élastomère diénique solide est mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est typiquement supérieure à 70°C, le plus souvent supérieure à 90°C, par exemple comprise entre 100°C et 150°C.

On préfère introduire, au moins en partie, le plastifiant liquide au cours de l'étape a) de fabrication du masterbatch lui-même, plus préférentiellement dans ce cas soit en même temps que la résine hydrocarbonée, soit après introduction de cette dernière. Selon un mode de réalisation particulièrement avantageux, un mélange de la résine hydrocarbonée et du plastifiant liquide pourra être préparé préalablement à l'incorporation dans l'élastomère diénique.

L'étape b) d'incorporation du système de réticulation est conduite à une température préférentiellement inférieure à 80°C, par ailleurs inférieure préférentiellement à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) ci-dessus peut être intercalée, si nécessaire, une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

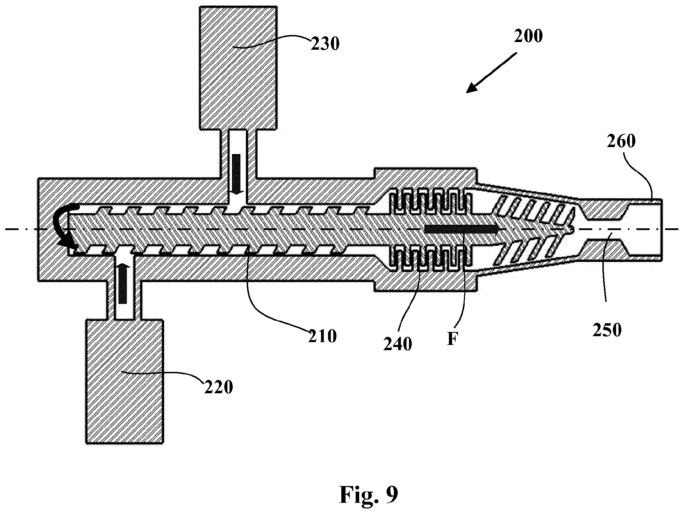

L'étape a) de fabrication du masterbatch est réalisée de préférence dans un mélangeur-extrudeur à vis tel que schématisé par exemple de manière simple à la figure 9.

On voit sur cette figure 9 un mélangeur-extrudeuse à vis 200 comportant essentiellement une vis (par exemple une mono-vis) d'extrusion 210, une première pompe de dosage 220 pour l'élastomère diénique (solide) et au moins une deuxième pompe de dosage 230 pour la résine (solide ou liquide) et le plastifiant liquide. La résine hydrocarbonée et le plastifiant liquide peuvent être introduits par exemple au moyen d'une pompe de dosage unique, s'ils ont déjà été mélangés préalablement, ou bien être introduits séparément au moyen d'une deuxième pompe et troisième pompe (troisième pompe non représentée sur la figure 9, pour simplification), respectivement. Les pompes de dosages 220, 230 permettent de monter en pression tout en conservant la maîtrise du dosage et les caractéristiques initiales des matériaux, la dissociation des fonctions de dosages (élastomère, résine et plastifiant liquide) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie 240 dite « hacheur-homogénéisateur », zone à la sortie de laquelle le masterbatch final 250 ainsi obtenu, progressant dans le sens de la flèche F, est finalement extrudé à travers une filière 260 permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion 200 pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de la couche de produit auto-obturant dans des conditions industrielles satisfaisantes, sans risque de pollution des outils due à un collage parasite de la composition sur les parois des mélangeurs.

### III. Fabrication des pneumatiques

Les pneumatiques des figures 4 et 8 peuvent être fabriqués, comme l'indique le document WO 2011/032886 en intégrant une couche auto-obturante dans une ébauche non vulcanisée de pneumatique en utilisant un tambour de fabrication et les autres techniques usuelles dans la fabrication des bandages pneumatiques.

Plus précisément, une couche de protection, par exemple un film thermoplastique chloré, est appliquée en premier sur le tambour de fabrication. Cette couche de protection peut être enroulée tout autour du tambour de fabrication puis soudée. On peut aussi mettre en place un manchon de protection soudé au préalable. On applique ensuite, successivement, tous les autres composants usuels du pneumatique.

La couche de produit auto-obturant est disposée directement sur la couche de protection. Cette couche a été au préalable pré-formée par toute technique connue, par exemple extrusion ou calandrage. Son épaisseur est préférentiellement supérieure à 0,3 mm, plus préférentiellement comprise entre 0,5 et 10 mm (en particulier pour des bandages pneumatiques de véhicules de tourisme entre 1 et 5 mm). Une couche étanche est alors mise en place sur la couche auto-obturante, suivie par la nappe carcasse.

Dans un procédé de fabrication deux temps, l'ébauche de pneumatique est alors conformée pour prendre la forme d'un tore. La couche de protection constituée d'une composition à base d'un film polymère thermoplastique chloré a une rigidité suffisamment faible, une extensibilité uniaxiale et biaxiale suffisantes et est suffisamment liée à la surface de la couche auto-obturante en raison du collant de celle-ci pour suivre les mouvements de l'ébauche de pneumatique sans se décoller ni se déchirer.

Après la conformation, les nappes sommet et la bande de roulement sont mises en place sur l'ébauche du pneumatique. L'ébauche ainsi achevée est placée dans un moule de cuisson et est vulcanisée. Pendant la vulcanisation, la couche de protection protège la membrane de cuisson du moule de tout contact avec la couche auto-obturante.

A la sortie du moule de cuisson, la couche de protection reste attachée à la couche auto-obturante. Cette couche de protection ne comporte aucune fissure ni déchirure et se décolle sans aucune difficulté de la membrane de cuisson.

Les pneumatiques des figures 4 et 8 peuvent aussi être fabriqués en utilisant un noyau rigide imposant la forme de la cavité intérieure du bandage. Dans ce procédé, on applique alors en premier la couche de protection sur la surface du noyau, puis l'ensemble des autres constituants du pneumatique. L'application sur le noyau est réalisée dans l'ordre requis par l'architecture finale. Les constituants du pneumatique sont disposés directement à leur place finale, sans subir de conformation à aucun moment de la confection. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchouteuses. Le pneumatique peut être moulé et vulcanisé comme exposé dans le brevet US 4 895 692. La présence de la couche de protection permet, comme dans le cas de la membrane de cuisson, de séparer aisément le pneumatique du noyau à l'issue de la phase de vulcanisation.

Il est aussi possible de mettre en place la couche de produit auto-obturant après la vulcanisation du pneumatique par tout moyen approprié, par exemple par collage, par pulvérisation ou encore extrusion directe sur la surface interne du pneumatique.

Les couches de produit auto-obturant présentées aux figures 4 et 8 correspondent au second mode de réalisation décrit précédemment. Ces couches sont constituées d'une composition auto-obturante comportant les trois constituants essentiels que sont du caoutchouc naturel (100 pce), environ 50 pce de résine hydrocarbonée ("Escorez 2101" de la société Exxon Mobil - point de ramollissement égal à environ 90°C) et environ 15 pce de polybutadiène liquide ("Ricon 154" de la société Sartomer Cray Valley - Mn égale à 5200 environ) ; elle comporte en outre une très faible quantité (1 pce) de noir de carbone (N772).

La composition auto-obturante ci-dessus a été préparée à l'aide d'une extrudeuse mono-vis (L/D = 40) telle que schématisée à la figure 9 (déjà commentée précédemment) ; le mélange des trois constituants de base (NR, résine et plastifiant liquide) a été réalisé à une température (comprise entre 100 et 130°C) supérieure à la température de ramollissement de la résine. L'extrudeuse utilisée comportait deux alimentations (trémies) différentes (NR d'une part, résine et plastifiant liquide d'autre part préalablement mélangés à un température de 130 à 140°C environ) et une pompe d'injection liquide sous pression pour le mélange résine/ plastifiant liquide (injecté à une température de 100 à 110°C environ) ; quand l'élastomère, la résine et le plastifiant liquide sont ainsi intimement mélangés, on a constaté que le pouvoir collant parasite de la composition diminuait de manière très significative.

Des résultats similaires ont été obtenus en utilisant comme couche auto-obturante une composition comportant un élastomère thermoplastique styrénique TPS, telle que précédemment décrite.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (à un taux de 1 pce), à basse température maintenue à une valeur inférieure à +30°C (refroidissement des cylindres par circulation d'eau).

### IV. Essais pneus

### IV-1. Test de décoincement

La méthode de test utilisée pour caractériser la résistance au décoincement des pneumatiques en roulage à plat est décrite dans le document EP 1 650 543 A2.

Cette méthode consiste, après avoir amené la pression de gonflage de l'ensemble pneumatique et roue à une valeur nulle sur le lieu de l'essai, à imposer une mise en appui brutale sur le côté dégonlé, avec une vitesse d'entrée fixée à 60 km/h, par une rotation rapide du volant.

Les vitesses de rotation du volant pour les mises en appui sont supérieures à 500 °/s.

Le test se déroule suivant une succession de passages où au fur et à mesure, les angles volants imposés augmentent en commençant à 90°.

L'angle au volant est maintenu par le conducteur pendant deux secondes puis celui-ci note l'accélération maximale relevée et recommencer la manoeuvre avec un angle au volant supérieur. Pour maîtriser la vitesse d'entrée et relever les accélérations maximales, le véhicule d'essai est équipé de capteurs de mesure des accélérations. La vitesse est soit déduite des accélérations mesurées, soit mesurée directement.

L'essai est terminé lorsque le pneumatique testé décoince ou lorsque le volant arrive en butée.

On donne la valeur maximale d'accélération relevée ainsi que l'angle au volant qui a entraîné le décoincement.

Des tests ont été réalisés sur des pneumatiques correspondant aux figures 4 (pneumatique B) et 8 (pneumatique T), de dimension 205/55 R16 Primacy, montés sur des jantes H2 et un véhicule Audi A4.

Les résultats sont les suivants :

**Tableau 1**

| Pneumatique | Valeur d'accélération transversale maximale | Angle au volant |
|---|---|---|
| B | 0,59 g | 240° |
| T | 0,62 g | 240° |

Ces tests montrent que ces deux architectures de pneumatique permettent, lorsqu'ils sont montés sur une jante de géométrie H2, de supporter une accélération transversale nettement supérieure à 0,5 g sans subir de décoincement.

Il est à noter que la présence de la couche de produit auto-obturant a permis de réaliser ce test dans des conditions de roulage à plat. Sans cette couche, le flanc des pneumatiques aurait été détruit trop rapidement.

### IV-2. Test de roulage à plat

La méthode de test des pneumatiques autoporteurs ou équipés d'appuis de soutien est de faire rouler l'ensemble pneumatique et roue testé en roulage à plat, à charge nominale, en ligne droite et à une vitesse de 80 km/h jusqu'à ce que le conducteur relève des signaux tels que vibrations indiquant que le pneumatique est endommagé.

Dans le cas des pneumatiques correspondant aux figures 4 (pneumatique B) et 8 (pneumatique T), ne comportant pas de lentille additionnelle et donc impliquant un contact bourrelet / flanc dès leur mise à plat, cette méthode de test n'est pas applicable parce que les signaux tels que vibrations sont sensibles dès le début du roulage à plat.

Des tests de roulage à vitesse réduite ont été réalisés avec ces pneumatiques avec et sans couche de produit auto-obturant montés sur des jantes et un véhicule similaires aux tests précédents. Ces tests ont montré que la présence d'une couche de produit auto-obturant telle que précédemment décrite associée à une structure de bourrelet résistante au décoincement permet d'augmenter d'une distance de l'ordre de 3 km jusqu'à une distance supérieure à 5 km la résistance des pneumatiques au roulage à plat tout en conservant une capacité de direction du véhicule.

Ce résultat montre tout l'intérêt de la présence de cette couche de produit auto-obturant pour prolonger la durée de vie des pneumatiques dans des conditions de roulage à plat.

Bien entendu, la présence d'une lentille additionnelle disposée entre la nappe carcasse et la gomme intérieure permet d'augmenter la portance structurelle des pneumatiques ainsi que la durée de vie de ceux-ci dans des conditions de roulage à plat.

### IV-3. Test de résistance aux perforations

Des tests ont été réalisés sur des pneumatiques correspondant aux figures 4 (pneumatique B) et 8 (pneumatique T) avec et sans couche de produit auto-obturant 55 montés sur des jantes et un véhicule similaires aux tests précédents. La couche auto-obturante a une épaisseur de 3 mm.

Sur un des pneumatiques monté et gonflé, huit perforations de 5 mm de diamètre ont été réalisées, à travers la bande de roulement et le bloc sommet à l'aide de poinçons qui ont été immédiatement retirés.

Ce pneumatique a résisté à un roulage sur volant à 150 km/h, sous une charge nominale de 400 kg, sans perte de pression pendant plus de 1 500 km, distance au-delà de laquelle le roulage a été stoppé.

Sur un autre pneumatique, on a procédé de la même façon en laissant cette fois en place les objets perforants, pendant une semaine. Le même excellent résultat a été obtenu.

Sans composition auto-obturante et dans les mêmes conditions que ci-dessus, le pneumatique ainsi perforé perd sa pression en moins d'une minute, devenant totalement inapte au roulage.

On a conduit d'autres part des tests d'endurance sur des pneumatiques conformes à l'invention, identiques aux précédents, mais ayant roulé 750 km, jusqu'à une vitesse de 150 km/h, en laissant cette fois en place les poinçons dans leurs perforations. Après extraction des poinçons (ou expulsion de ces derniers suite au roulage), ces bandages pneumatiques de l'invention ont résisté au roulage sur volant sans perte de pression, dans les mêmes conditions que précédemment (distance parcourue de 1 500 km à une vitesse de 150 km/h et sous une charge nominale de 400 kg).

L'invention n'est pas limitée aux exemples décrits et représentés et diverses modifications peuvent y être apportées sans sortir de son cadre défini par les revendications annexées.

## Revendications

1. Pneumatique en forme de tore ouvert radialement intérieurement avec une paroi intérieure et une paroi extérieure, ladite paroi intérieure étant au moins en partie recouverte d'une couche étanche (50), un sommet (25), deux flancs (30) et deux bourrelets (20), une armature de sommet (80, 90) et une armature de carcasse (60) ancrée dans les deux bourrelets et s'étendant au moins desdits bourrelets jusqu'au sommet, chaque bourrelet comportant une structure annulaire de renforcement (70), ladite structure annulaire de renforcement comprenant plusieurs enroulements d'un fil métallique unique, agencés axialement côte à côte en plusieurs couches radialement superposées de façon à définir une section transversale hexagonale, **caractérisé en ce que** ladite couche étanche est, au moins en partie, recouverte d'une couche de produit auto-obturant (55), **en ce que** une lentille additionnelle de renfort est disposée au niveau desdits flancs entre ladite couche étanche et ladite armature de carcasse, et ladite lentille additionnelle de renfort est un mélange caoutchouteux avec une épaisseur maximale comprise entre 0,5 et 10 mm, et de préférence entre 0,5 et 4 mm, et **en ce que** :
- ladite armature de carcasse comportant une pluralité d'éléments de renforcement de carcasse, disposés de façon adjacente et alignés circonférentiellement, ancrés dans les deux bourrelets par un retournement autour de la structure annulaire de renforcement, de manière à former dans chaque bourrelet un brin aller (61) et un brin retour (62), chaque brin retour s'étendant radialement à l'extérieur jusqu'à une extrémité (63) située à une distance radiale DRR du point (71) radialement le plus à l'intérieur de la structure annulaire de renforcement du bourrelet, la distance radiale DRR est supérieure ou égale à 7% et inférieure ou égale à 30% de la hauteur radiale H du pneumatique ;
- chaque bourrelet comportant un mélange caoutchouteux appelé bourrage, le bourrage étant situé radialement à l'extérieur de la structure annulaire de renforcement et au moins partiellement entre le brin aller et le brin retour de l'armature de carcasse, le bourrage s'étendant radialement à l'extérieur du point radialement le plus à l'intérieur de la structure annulaire de renforcement du bourrelet jusqu'à une distance radiale DRB dudit point, la distance radiale DRB est comprise entre 20 et 45% de la hauteur radiale H du pneumatique,
- chaque bourrelet comportant en outre un mélange caoutchouteux appelé bande extérieure (120) placé axialement à l'extérieur de l'armature de carcasse et du bourrage, chaque bande extérieure s'étendant radialement entre une extrémité (121) radialement intérieure de la bande extérieure et une extrémité (122) radialement extérieure de la bande extérieure, l'extrémité (121) radialement intérieure de la bande extérieure étant située à une distance DRI du point (71) radialement le plus à l'intérieur de la structure annulaire de renforcement du bourrelet, la distance radiale DRI est comprise entre 1 et 10% de la hauteur radiale H du pneumatique, l'extrémité (122) radialement extérieure de la bande extérieure étant située à une distance DRL du point (71) radialement le plus à l'intérieur de la structure annulaire de renforcement du bourrelet, la distance radiale DRL est comprise entre 35 et 50% de la hauteur radiale H du pneumatique.

2. Pneumatique selon la revendication 1, dans lequel la section du fil métallique est choisie dans le groupe des sections circulaire, carrée, rectangulaire et hexagonale.

3. Pneumatique selon l'une des revendications 1 et 2, dans lequel lesdites couches radialement superposées sont agencées selon la configuration 3-4-5-4-3.

4. Pneumatique selon l'une des revendications 1 et 2, dans lequel lesdites couches radialement superposées sont agencées selon la configuration 3-4-3-2.

5. Pneumatique selon l'une quelconque des revendications précédentes, dans lequel la section du fil métallique a sa plus grande dimension comprise entre 1 et 1,8 mm.

6. Pneumatique selon l'une quelconque des revendications précédentes, dans lequel, les bourrelets comportant en plus un mélange caoutchouteux appelé protecteur destiné à entrer en contact avec un siège de jante et s'étendant en partie axialement extérieurement relativement à ladite bande extérieure, l'ensemble formé par les mélanges caoutchouteux bourrage, bande extérieure et protecteur a une épaisseur maximale E, mesurée dans tout plan radial dans une direction (150) perpendiculaire au brin aller de l'armature de carcasse avec ledit ensemble, telle que le rapport E/DRL est supérieur à 15 % et de préférence supérieur à 20%.

7. Pneumatique selon la revendication 6, dans lequel le module d'extension à 10% des mélanges caoutchouteux bourrage, bande extérieure et protecteur est compris entre 5 et 15 MPa.

8. Pneumatique selon l'une quelconque des revendications précédentes, dans lequel l'épaisseur maximale de la lentille additionnelle est comprise entre 0,5 et 2,5 mm.

9. Pneumatique selon l'une quelconque des revendications précédentes, dans lequel la couche auto-obturante comporte au moins (pce signifiant parties en poids pour cent parties d'élastomère) un élastomère thermoplastique styrénique (dit « TPS ») et plus de 200 pce d'une huile d'extension dudit élastomère.

10. Pneumatique selon la revendication 9, dans lequel le TPS est l'élastomère majoritaire de la couche auto-obturante.

11. Pneumatique selon l'une quelconque des revendications 9 et 10, dans lequel l'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

12. Pneumatique selon la revendication 11, dans lequel l'élastomère TPS est choisi dans le groupe constitué par les copolymères SEBS, les copolymères SEPS et les mélanges de ces copolymères.

13. Pneumatique selon l'une quelconque des revendications 1 à 8, dans lequel la couche auto-obturante comporte au moins (pce signifiant parties en poids pour cent parties d'élastomère solide) :
(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 120 pce d'une charge.

14. Pneumatique selon la revendication 13, dans lequel l'élastomère diénique insaturé est choisi dans le groupe constitué par les polybutadiènes, le caoutchouc naturel, les polyisoprènes de synthèse, les copolymères de butadiènes, les copolymères d'isoprène et les mélanges de tels élastomères.

15. Pneumatique selon la revendication 14, dans lequel l'élastomère diénique insaturé est un élastomère isoprénique, de préférence choisi dans le groupe constitué par le caoutchouc naturel, les polyisoprènes de synthèse et les mélanges de tels élastomères.

## Patentansprüche

1. Reifen in Form eines radial innen offenen Rings mit einer Innenwand und einer Außenwand, wobei die Innenwand mindestens zum Teil von einer dichten Schicht (50) abgedeckt ist, mit einer Lauffläche (25), zwei Flanken (30) und zwei Wülsten (20), einer Laufflächenbewehrung (80, 90) und einer Karkassenbewehrung (60), die in den zwei Wülsten verankert ist und sich mindestens von den Wülsten bis zu der Lauffläche erstreckt, wobei jeder Wulst eine ringförmige Verstärkungsstruktur (70) umfasst, wobei die ringförmige Verstärkungsstruktur mehrere Wicklungen eines einzigen Metalldrahts umfasst, die axial nebeneinander in mehreren Schichten radial übereinander liegend derart eingerichtet sind, dass sie einen sechseckigen Querschnitt bilden, **dadurch gekennzeichnet, dass** die dichte Schicht mindestens zum Teil von einer selbst dichtenden Produktschicht (55) abgedeckt ist, dass eine zusätzliche Verstärkungslinse in dem Bereich der Flanken zwischen der dichten Schicht und der Karkassenbewehrung angeordnet ist, und die zusätzliche Verstärkungslinse ein Kautschukgemisch mit einer maximalen Stärke zwischen 0,5 und 10 mm und bevorzugt zwischen 0,5 und 4 mm ist, und dass:
- die Karkassenbewehrung eine Vielzahl von Karkassenverstärkungselementen umfasst, die nebeneinander und umfangsmäßig ausgerichtet sind und in den zwei Wülsten durch eine Umkehrung um die ringförmige Verstärkungsstruktur derart verankert sind, dass in jedem Wulst ein Hinlauftrum (61) und ein Rücklauftrum (62) gebildet wird, wobei sich jedes Rücklauftrum radial außerhalb bis zu einem Ende (63) erstreckt, das in einem radialen Abstand DRR von dem Punkt (71) liegt, der radial am weitesten innerhalb der ringförmigen Verstärkungsstruktur der Wulst ist, wobei der radiale Abstand DRR größer oder gleich 7 % und kleiner oder gleich 30 % der radialen Höhe H des Reifens ist,
- jeder Wulst ein Kautschukgemisch, Packung genannt, umfasst, wobei die Packung radial außerhalb der ringförmigen Verstärkungsstruktur und mindestens teilweise zwischen dem Hinlauftrum und dem Rücklauftrum der Karkassenbewehrung liegt, wobei sich die Packung radial außerhalb des Punkts erstreckt, der radial am weitesten innerhalb der ringförmigen Verstärkungsstruktur des Wulsts liegt, bis zu einem radialen Abstand DRB von dem Punkt, wobei der radiale Abstand DRB zwischen 20 und 45 % der radialen Höhe H des Reifens liegt,
- jeder Wulst außerdem ein Kautschukgemisch umfasst, das Außenband (120) genannt wird, das axial außerhalb der Karkassenbewehrung und der Packung platziert ist, wobei sich jedes Außenband radial zwischen einem radial inneren Ende (121) des Außenbands und einem radial äußeren Ende (122) des Außenbands erstreckt, wobei das radial innere Ende (121) des Außenbands in einem Abstand DRI von dem Punkt (71) liegt, der radial am weitesten innerhalb der ringförmigen Verstärkungsstruktur des Wulsts liegt, wobei der radiale Abstand DRI zwischen 1 und 10 % der radialen Höhe H des Reifens liegt, wobei das radial äußere Ende (122) des Außenbands in einem Abstand DRL von dem Punkt (71) liegt, der radial am weitesten innerhalb der ringförmigen Verstärkungsstruktur des Wulsts liegt, wobei der radiale Abstand DRL zwischen 35 und 50 % der radialen Höhe H des Reifens liegt.

2. Reifen nach Anspruch 1, wobei der Querschnitt des Metalldrahts aus der Gruppe der kreisförmigen, quadratischen, rechteckigen und sechseckigen Querschnitte ausgewählt ist.

3. Reifen nach einem der Ansprüche 1 und 2, wobei die radial übereinander liegenden Schichten gemäß der Konfiguration 3-4-5-4-3 eingerichtet sind.

4. Reifen nach einem der Ansprüche 1 und 2, wobei die radial übereinander liegenden Schichten gemäß der Konfiguration 3-4-3-2 eingerichtet sind.

5. Reifen nach einem der vorhergehenden Ansprüche, wobei der Querschnitt des Metalldrahts an seinem größten Maß zwischen 1 und 1,8 mm liegt.

6. Reifen nach einem der vorhergehenden Ansprüche, wobei die Wülste, die außerdem ein Kautschukgemisch, das Schutz genannt wird, umfassen, das dazu bestimmt ist, mit einem Felgensitz in Berührung zu kommen und sich zum Teil axial außerhalb in Bezug zu dem Außenband erstreckt, die Einheit, die aus den Kautschukgemischen Packung, Außenband und Schutz gebildet ist, eine maximale Stärke E hat, die in jeder radialen Ebene in eine Richtung (150) senkrecht zu dem Hinlauftrum der Karkassenbewehrung mit der Einheit derart gemessen wird, dass das Verhältnis E/DRL größer ist als 15 % und bevorzugt größer als 20 %.

7. Reifen nach Anspruch 6, wobei das Dehnungsmodul zu 10 % der Kautschukgemische Packung, Außenband und Schutz zwischen 5 und 15 MPa liegt.

8. Reifen nach einem der vorhergehenden Ansprüche, wobei die maximale Stärke der zusätzlichen Linse zwischen 0,5 und 2,5 mm liegt.

9. Reifen nach einem der vorhergehenden Ansprüche, wobei die selbstdichtende Schicht mindestens (wobei pce Gewichtsanteile pro einhundert Elastomeranteile bedeutet) ein Styrol-Thermoplastelastomer ("TPS" genannt) und mehr als 200 pce eines Verlängerungsöls des Elastomers umfasst.

10. Reifen nach Anspruch 9, wobei das TPS das Hauptanteilelastomer der selbstdichtenden Schicht ist.

11. Reifen nach einem der Ansprüche 9 und 10, wobei das TPS-Elastomer aus der Gruppe ausgewählt ist, die aus Styrol/Butadien/Styrol (SBS)-, Styrol/Isopren/Styrol (SIS)-, Styrol/Isopren/Butadien/Styrol (SIBS)-, Styrol/Ethylen/Butylen/Styrol (SEBS)-, Styrol/Ethylen/Propylen/Styrol (SEPS)-, Styrol/Ethylen/Ethylen/Propylen/Styrol (SEEPS)-Blockcopolymeren und den Gemischen dieser Copolymere besteht.

12. Reifen nach Anspruch 11, wobei das TPS-Elastomer aus der Gruppe ausgewählt ist, die aus den Copolymeren SEBS, den Copolymeren SEPS und den Gemischen dieser Copolymere besteht.

13. Reifen nach einem der Ansprüche 1 bis 8, wobei die selbstdichtende Schicht mindestens (wobei pce Gewichtsanteile pro einhundert Elastomerfeststoffanteile bedeutet):
(a) als Hauptanteilelastomer ein ungesättigtes Dienelastomer,
(b) zwischen 30 und 90 pce eines Kohlenwasserstoffharzes,
(c) einen flüssigen Weichmacher, dessen Tg (Glasübergangstemperatur) niedriger ist als - 20 °C, mit einem Gewichtsanteil zwischen 0 und 60 pce, und
(d) von 0 bis weniger als 120 pce eines Füllstoffs umfasst.

14. Reifen nach Anspruch 13, wobei das ungesättigte Dienelastomer aus der Gruppe ausgewählt ist, die aus den Polybutadienen, dem Naturkautschuk, den Kunst-Polyisoprenen, den Butadien-Copolymeren, den Isopren-Copolymeren und den Gemischen solcher Elastomere besteht.

15. Reifen nach Anspruch 14, wobei das ungesättigte Dienelastomer ein Isopren-Elastomer ist, das bevorzugt aus der Gruppe ausgewählt ist, die aus dem Naturkautschuk, den Kunst-Polyisoprenen und den Gemischen solcher Elastomere besteht.

## Claims

1. Tyre in the form of a torus open radially on the inside with an inner wall and an outer wall, the said inner wall being at least partially covered with an airtight layer (50), a crown (25), two sidewalls (30) and two beads (20), a crown reinforcement (80, 90) and a carcass reinforcement (60) anchored in the two beads and extending at least from the said beads as far as the crown, each bead comprising an annular reinforcing structure (70), the said annular reinforcing structure comprising several windings of a single metal thread, which windings are arranged axially side by side in several radially superposed layers so as to define a hexagonal cross section,
**characterized in that** the said airtight layer is, at least in part, covered with a layer of self-sealing product (55), **in that** an additional reinforcing lentil is arranged in the region of the said sidewalls between the said airtight layer and the said carcass reinforcement, and the said additional reinforcing lentil is a rubber compound with a maximum thickness comprised between 0.5 and 10 mm, and preferably between 0.5 and 4 mm, and **in that**,
- with the said carcass reinforcement comprising a plurality of carcass reinforcing elements, arranged adjacently and circumferentially aligned, anchored in the two beads by a turn-up around the annular reinforcing structure, so as to form within each bead an outward strand (61) and a return strand (62), each return strand extending radially outwardly as far as an end (63) situated a radial distance DRR from the radially innermost point (71) of the annular reinforcing structure of the bead, the radial distance DRR is greater than or equal to 7% and less than or equal to 30% of the radial height H of the tyre;
- with each bead comprising a rubber compound referred to as filling, the filling being situated radially on the outside of the annular reinforcing structure and at least partially between the outward strand and the return strand of the carcass reinforcement, the filling extending radially on the outside of the radially innermost point of the annular reinforcing structure of the bead as far as a radial distance DRB from the said point, the radial distance DRB is comprised between 20 and 45% of the radial height H of the tyre;
- with each bead further comprising a rubber compound referred to as outer strip (120) positioned axially on the outside of the carcass reinforcement and of the filler, each outer strip extending radially between a radially inner end (121) of the outer strip and a radially outer end (122) of the outer strip, the radially inner end (121) of the outer strip being situated a distance DRI from the radially innermost point (71) of the annular reinforcing structure of the bead, the radial distance DRI is comprised between 1 and 10% of the radial height H of the tyre, the radially outer end (122) of the outer strip being situated a distance DRL from the radially innermost point (71) of the annular reinforcing structure of the bead, the radial distance DRL is comprised between 35 and 50% of the radial height H of the tyre.

2. Tyre according to Claim 1, in which the cross section of the metal thread is selected from the group of circular, square, rectangular and hexagonal cross sections.

3. Tyre according to one of Claims 1 and 2, in which the said radially superposed layers are arranged in the 3-4-5-4-3 configuration.

4. Tyre according to one of Claims 1 and 2, in which the said radially superposed layers are arranged in the 3-4-3-2 configuration.

5. Tyre according to any one of the preceding claims, in which the cross section of the metal thread has its largest dimension comprised between 1 and 1.8 mm.

6. Tyre according to any one of the preceding claims, in which, with the beads additionally comprising a rubber compound referred to as protector intended to come into contact with a rim seat and extending partially axially on the outside relative to the said outer strip, the assembly formed by the filler, outer strip and protector rubber compounds has a maximum thickness E, measured in any radial plane in a direction (150) perpendicular to the outward strand of the carcass reinforcement with the said assembly such that the ratio E/DRL is greater than 15% and preferably greater than 20%.

7. Tyre according to Claim 6, in which the modulus at 10% elongation of the filling, outer strip and protector rubber compounds is comprised between 5 and 15 MPa.

8. Tyre according to any one of the preceding claims, in which the maximum thickness of the additional lentil is comprised between 0.5 and 2.5 mm.

9. Tyre according to any one of the preceding claims, in which the self-sealing layer comprises at least (phr meaning parts by weight per hundred parts of elastomer) one thermoplastic styrene ("TPS") elastomer and more than 200 phr of an extending oil for the said elastomer.

10. Tyre according to Claim 9, in which the TPS is the predominant elastomer of the self-sealing layer.

11. Tyre according to either one of Claims 9 and 10, in which the TPS elastomer is selected from the group consisting of styrene/butadiene/styrene (SBS), styrene/isoprene/styrene (SIS), styrene/isoprene/butadiene/styrene (SIBS), styrene/ethylene/butylene/styrene (SEBS), styrene/ethylene/propylene/styrene (SEPS) and styrene/ethylene/ethylene/propylene/styrene (SEEPS) block copolymers and the mixtures of these copolymers.

12. Tyre according to Claim 11, in which the TPS elastomer is selected from the group consisting of SEBS copolymers, SEPS copolymers and the mixtures of these copolymers.

13. Tyre according to any one of Claims 1 to 8, in which the self-sealing layer comprises at least (phr meaning parts by weight per hundred parts of solid elastomer):
(a) as predominant elastomer, an unsaturated diene elastomer;
(b) between 30 and 90 phr of a hydrocarbon resin;
(c) a liquid plasticizer, the Tg (glass transition temperature) of which is less than -20°C, at a content by weight of between 0 and 60 phr; and
(d) from 0 to less than 120 phr of a filler.

14. Tyre according to Claim 13, in which the unsaturated diene elastomer is selected from the group consisting of polybutadienes, natural rubber, synthetic polyisoprenes, butadiene copolymers, isoprene copolymers and the mixtures of such elastomers.

15. Tyre according to Claim 14, in which the unsaturated diene elastomer is an isoprene elastomer, preferably selected from the group consisting of natural rubber, synthetic polyisoprenes and the mixtures of such elastomers.
